(19) **Europäisches Patentamt / European Patent Office / Office européen des brevets**

(11) **EP 4 566 721 A1**

(12) **EUROPEAN PATENT APPLICATION**
published in accordance with Art. 153(4) EPC

(43) Date of publication:
**11.06.2025 Bulletin 2025/24**

(51) International Patent Classification (IPC):
**B05B 12/08** (2006.01)    **A01M 7/00** (2006.01)

(21) Application number: **23849569.1**

(52) Cooperative Patent Classification (CPC):
**A01M 7/00; B05B 12/08**

(22) Date of filing: **17.07.2023**

(86) International application number:
**PCT/ES2023/070458**

(87) International publication number:
**WO 2024/028530 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.08.2022 ES 202230724**

(71) Applicant: **Pulverizadores Fede, S.L.**
**46380 Cheste (Valencia) (ES)**

(72) Inventors:
• **PEREZ SALVADOR, Federico**
  **46380 Cheste (Valencia) (ES)**
• **BERGER, Lars Torsten**
  **46120 Alboraya (Valencia) (ES)**

(74) Representative: **Capitán García, Maria Nuria**
**ARS Privilegium, S.L.**
**Felipe IV no. 10, bajo iz.**
**28014 Madrid (ES)**

(54) **FLUID SPRAYING SYSTEM, CALIBRATION METHOD FOR THE OPERATION POINT OF THE FLUID SPRAYING SYSTEM, AND CALIBRATION METHOD OF PRESSURE DAMPING MEANS USED IN SAID FLUID SPRAYING SYSTEM**

(57)    Fluid spraying system, adapted to be mounted on an agricultural vehicle, whether self-propelled, or as a trailer propelled by another vehicle, used to treat an agricultural or forestry crop or an agricultural or forestry surface, which allows maintaining a substantially constant pressure of the fluid to be sprayed, regardless of the number of spray nozzles in operation. Also objects of the invention are a method for calibrating the operating point of the fluid spraying system, as well as a method for calibrating pressure damping means used in said fluid spraying system.

**Fig. 1**

EP 4 566 721 A1

**Description**

TECHNICAL FIELD OF THE INVENTION

The present invention is encompassed in the field of agricultural machinery, specifically, agricultural sprayers.

An object of the invention is a fluid spraying system, of the kind commonly mounted on an agricultural vehicle, whether aerial or land-based, self-propelled, or as a trailer propelled by another vehicle, used to treat an agricultural or forestry crop, or an agricultural or forestry surface, that is, where the sowing has not yet sprouted or is beginning to sprout, thus including all spraying machines. In particular, the present spraying system advantageously allows maintaining a substantially constant pressure of the fluid to be sprayed, regardless of the number of spray nozzles in operation.

In other words, it is a spraying system that promotes saving of the fluid to be sprayed on the agricultural or forestry crop, or agricultural or forestry surface, thanks to the activation or deactivation, as required by the conditions of said agricultural or forestry crop or surface to be treated, of the different flow passage regulation means that control the ejection of the fluid to be sprayed through the corresponding spray nozzles, without varying the pressure of the fluid to be sprayed through the spray nozzles whose flow passage regulation means are activated, by deactivating the corresponding flow passage regulation means of the rest of the spray nozzles that are not in operation, that is, those that are not ejecting fluid to be sprayed on the agricultural or forestry crop or surface.

Also objects of the invention are a method for calibrating the operating point (flow volume and pressure) at which the fluid spraying system will operate, as well as a method for calibrating pressure damping means used in said fluid spraying system.

BACKGROUND OF THE INVENTION

There are known spraying systems aimed at maintaining a constant flow volume and pressure of the fluid to be sprayed on an agricultural or forestry crop, or an agricultural or forestry surface, regardless of the variations in the number of spray nozzles in operation that the system develops during the application of the treatment to the agricultural or forestry crop or surface, seeking to provide the latter, at all times, with a treatment equal to or equivalent to that initially planned. In other words, the aim is to absorb the pressure changes that occur in the spraying system, due to the activation/deactivation of the different flow passage regulation means that control the spray nozzles, during the application of the treatment.

The aim is thus to design an alternative solution to the known spraying systems that, in a simple and economical way, can also absorb the pressure changes produced by the activation/deactivation of the different flow passage regulation means that control the spray nozzles during the application of the treatment.

DESCRIPTION OF THE INVENTION

The present invention is defined and characterised by the independent claims, while the dependent claims describe other characteristics thereof.

An object of the invention is a fluid spraying system, which is adapted to be mounted on an agricultural vehicle, whether aerial or land-based, self-propelled or as a trailer propelled by another vehicle.

The fluid spraying system comprises:

- a tank, which is configured to contain a fluid to be sprayed,
- a plurality of spray nozzles, which are configured to eject the fluid to be sprayed onto an agricultural or forestry crop or an agricultural or forestry surface to be treated,
- a pump, connected to the tank through a supply line, and configured to drive a fluid flow volume (Q) through a spray line connecting the pump to the spray nozzles,
- a plurality of flow passage regulation means, connected to the spray line, and configured to regulate outputs of the fluid to be sprayed through the spray nozzles,
- flow volume regulation means, connected to the spray line, and configured to reduce the fluid flow volume (Q) to a first spray flow volume (Q1) to be conveyed through the spray line to the spray nozzles, and to divert a first remaining flow volume (Qr1) of the fluid flow volume (Q) to the tank, and
- control means, which are configured to command an activation/deactivation of the flow passage regulation means and to command an actuation of the flow volume regulation means, such that the first spray flow volume (Q1) is adjusted to an operating flow volume value (Qi) to be used with all the flow passage regulation means activated.

Additionally, the fluid spraying system comprises pressure damping means, which are connected to the spray line between the flow volume regulation means and the flow passage regulation means.

The pressure damping means are configured to dampen pressure peaks and dips of the first spray flow volume (Q1) relative to an operating pressure value (pi), such that, when a first pressure value (p1) of the first spray flow volume (Q1) differs substantially from the operating pressure value (pi), due to the deactivation or activation of at least one of the flow passage regulation means, the pressure damping means are configured to adjust the first spray flow volume (Q1) to a second spray flow volume (Q2), corresponding to a second pressure value (p2) substantially equal to the operating pressure value (pi), to be conveyed through the spray line to the spray nozzles, and to divert a second remaining flow volume (Qr2) of the first spray flow volume (Q1) to the tank.

In the present invention, "substantially equal" means a target flow volume or pressure value that is at most within a tolerance range of ±20% of a reference value, for example, of operating flow volume (Qi) or operating pressure (pi) respectively. In another preferred embodiment, said tolerance interval could be ±10% of the reference value. And in another more preferred embodiment, the tolerance value is ±1% of said reference value. And in another more preferred embodiment, the tolerance value is ±0.1% of said reference value. In any case, the aim is to account for any possible imperfections that the spraying system may have, which may prevent, in practice, a desired flow volume or pressure value from being exactly equal to its corresponding reference value that is desired to be achieved.

"Differs substantially" means a flow volume or pressure value that is outside the tolerance range referred to in the above paragraph.

A "pressure peak" means a measured pressure value that differs substantially from and is higher than the operating pressure value (pi), and a "pressure dip" means a pressure value that differs substantially from and is lower than the operating pressure value (pi).

Operating flow volume (Qi) is understood as a predefined flow volume value that is established to give uniform treatment to the entire agricultural or forestry crop, or to the entire agricultural or forestry surface, which is based on a volume of fluid to be applied (D) in l/ha, a vehicle speed (V) in km/h, and a lane or bar width (R) in m, according to the following flow volume calculation formula:

$$Qi = \frac{V * D * R}{600}$$

And the operating pressure (pi) is the pressure value required to apply the uniform treatment to the entire agricultural or forestry crop or to the entire agricultural or forestry surface as appropriate, with all the spray nozzles of the system configured to be used in operation, that is, ejecting fluid.

Thus, a fluid spraying system is available that, in a simple and effective manner, manages to absorb pressure peaks and dips, i.e., pressure surges, which occur due to the variation in the activation or deactivation state of the flow passage regulation means that control the spray nozzles, during the application of the treatment to the agricultural or forestry crop or agricultural or forestry surface.

In other words, a system is achieved where the spraying of the agricultural or forestry crop or surface is regulated in real time by turning the flow ejection through spray nozzles on and off as required, that is, depending on the conditions or state of the agricultural or forestry crop or surface to be treated with the fluid ejected through each spray nozzle, ensuring that the spray nozzles of the flow passage regulation means that are activated receive a constant liquid pressure (substantially equal to the operating pressure (pi) set for the system), independently of the rest of the spray nozzles whose flow passage regulation means are deactivated, and thereby, through the spray nozzles that are on, a fluid flow volume equivalent to the operating flow volume (Qi) previously defined for a system state with all the spray nozzles operating is ejected.

Another object of the invention is a method of calibrating the operating point of the spraying system described above. Operating point is understood as the operating flow volume (Qi) and operating pressure (pi) values previously defined for the operation of the system with all spray nozzles in operation.

The method starts by defining the operating flow volume value (Qi) of the fluid to be sprayed on the agricultural or forestry crop or the agricultural or forestry surface to be treated.

An operating pressure value (pi) is then determined, based on a spray nozzle configuration to be used and the above defined operating flow volume value (Qi).

The flow passage regulation means are then activated so that, with the system in operation, all of the spray nozzles configured to be used eject the fluid to be sprayed.

Then, the pressure damping means are actuated, or alternatively, second flow passage regulation means of the second return line that connects the pressure damping means to the tank are closed, so that, with the system in operation, all of the first spray flow volume (Q1) is conveyed through the spray line to the spray nozzles.

Next, the flow volume regulation means are actuated, so that they generate a progressive variation in the first spray flow volume (Q1) to be conveyed through the spray line.

Next, measurements are made of a value of the first spray flow volume (Q1) conveyed through the spray line, or measurements of a first pressure value (p1) of said first spray flow volume (Q1), and when it is detected that the measured first spray flow volume value (Q1) is substantially equal to the operating flow volume value (Qi), or when it is detected that the measured first pressure value (p1) is substantially equal to the operating pressure value (pi), then the flow volume regulation means are actuated again, so as to stop the progressive variation of the first spray flow volume (Q1).

Then, the first pressure value (p1) of the first spray flow volume (Q1) is measured, when said first spray flow volume value (Q1) was previously measured, or, the first spray flow volume value (Q1) is measured, when the first pressure value (p1) of said first spray flow volume (Q1) was previously measured.

Finally, if in the above step measurements were made of the first pressure value (p1), it is verified that said first pressure value (p1) measured is substantially equal to the operating pressure value (pi), or, if in the previous step measurements were made of the first spray flow volume value (Q1), it is verified that said first spray flow volume value (Q1) measured is substantially equal to the operating flow volume value (Qi).

In this way, the fluid spraying system can be calibrated to the operating working point, that is, to the operating flow volume (Qi) and the operating pressure (pi) required to apply uniform treatment to the entire agricultural or forestry crop, or to the entire agricultural or forestry crop surface to be treated, with all the spray nozzles of the system in operation.

In addition, if as a result of the check carried out in the final step of the operating point calibration method it is detected that the first pressure value (p1) is not substantially equal to the operating pressure value (pi), or it is detected that the first spray flow volume value (Q1) is not substantially equal to the operating flow volume value (Qi), there are indications that there is a problem in the spraying system that must be solved before proceeding with the spraying tasks, for example, one of its spray nozzles is clogged or damaged, or there is a liquid leak at some point in the spray line of the system, which prevents its correct operation. In these cases, it can be foreseen that the system will emit a visual, audible and/or vibrating alarm to attract the attention of the operator of the spraying system in vehicles with a driver. The system could also report the alarm digitally, for example, through a local and/or cloud-based log, a notification on a mobile computer application (app) running on a mobile electronic device, such as a phone or tablet, of the farm supervisor, etc.

Another object of the invention is a method for calibrating the pressure damping means of the fluid spraying system described above to the operating pressure (pi).

It starts by activating the flow passage regulation means, so that all of the spray nozzles configured to be used eject fluid to be sprayed.

Next, the flow volume regulation means are actuated so that the first spray flow volume (Q1) is substantially equal to the operating flow volume value (Qi) of the operating point of the spraying system previously calibrated according to the method described above.

Then, the pressure damping means are actuated, or the second flow passage regulation means of the second return line connecting the pressure damping means to the tank are closed, so that all of the first spray flow volume (Q1) is conveyed through the spray line to the spray nozzles.

Next, the flow volume regulation means are actuated so that a first pressure value (p1) of the first spray flow volume (Q1) is substantially equal to the operating pressure value (pi) of the calibrated operating point plus, at most, twice a first increment (x) of between 0.01% and 50% of the value of said operating pressure (pi).

Subsequently, the pressure damping means are actuated, with the second flow passage regulation means open, so that a second measured pressure value (p2) is substantially equal to the operating pressure value (pi) plus the first increment (x).

Then, the flow volume regulation means are actuated so that the first spray flow volume (Q1) is substantially equal to the operating flow volume (Qi).

In this way, it is possible to calibrate the pressure damping means of the fluid spraying system to a second pressure value (p2) corresponding to an operating point of the system, at which it is guaranteed that all of the first spray flow volume (Q1), substantially equal to the operating flow volume (Qi), is conveyed through the spray line to the spray nozzles, which are all operational.

## BRIEF DESCRIPTION OF THE FIGURES

The present specification is complemented by a set of figures which illustrate the preferred example, and which in no way limit the invention.

Figure 1 represents a diagram of a first embodiment of the fluid spraying system.

Figure 2 represents a diagram of a second embodiment of the fluid spraying system.

## DETAILED EXPLANATION OF THE INVENTION

An object of the present invention is a fluid spraying system, which is adapted to be mounted on an agricultural vehicle, whether aerial or land-based, self-propelled or as a trailer propelled by another vehicle.

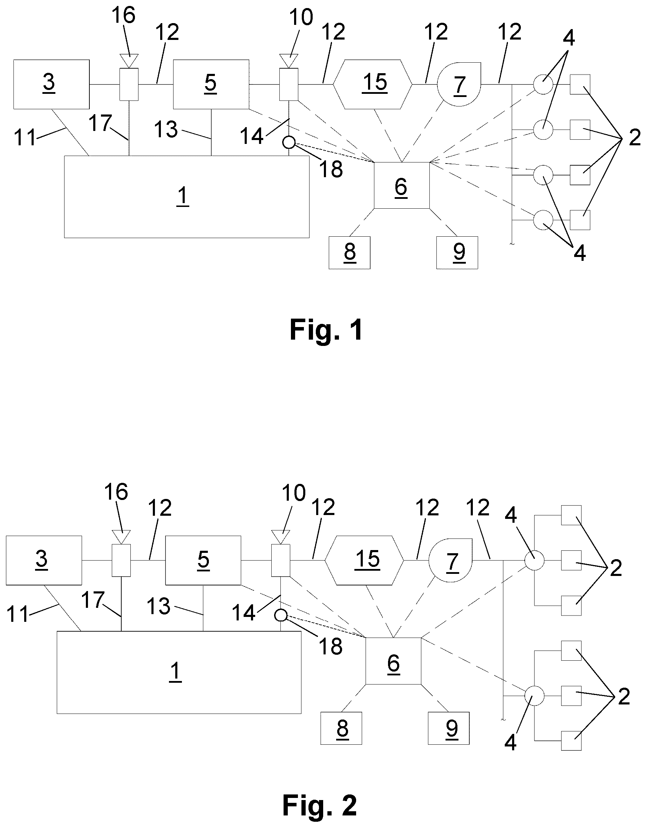

As shown in Figures 1 and 2, the fluid spraying system comprises:

- a tank (1), which is configured to contain a fluid to be sprayed,
- a plurality of spray nozzles (2), which are configured to eject the fluid to be sprayed onto an agricultural or forestry crop or an agricultural or forestry surface to be treated,
- a pump (3), connected to the tank (1) through a supply line (11), and which is configured to drive a fluid flow volume (Q) through a spray line (12) connecting the pump (3) to the spray nozzles (2),
- a plurality of flow passage regulation means (4), connected to the spray line (12), and which are configured to regulate outputs of the fluid to be sprayed through the spray nozzles (2),
- flow volume regulation means (5), connected to the spray line (12), and configured to reduce the fluid flow volume (Q) to a first spray flow volume (Q1) to be conveyed through the spray line (12) to the spray nozzles (2), and to divert a first remaining flow volume (Qr1) of the fluid flow volume (Q) to the tank (1), for example, through a first return line (13), and

- control means (6), which are configured to command an activation/deactivation of the flow passage regulation means (4) and to command an actuation of the flow volume regulation means (5), such that the first spray flow volume (Q1) is adjusted to an operating flow volume value (Qi) to be used with all the flow passage regulation means (4) activated.

Preferably, the flow volume regulation means (5) are an electric flow volume regulator.

Additionally, the system comprises pressure damping means (10), which are connected to the spray line (12) between the flow volume regulation means (5) and the flow passage regulation means (4).

The pressure damping means (10) are configured to dampen pressure peaks and dips of the first spray flow volume (Q1) relative to an operating pressure value (pi), such that, when a first pressure value (p1) of the first spray flow volume (Q1) differs substantially from the operating pressure value (pi), due to the deactivation or activation of at least one of the flow passage regulation means (4), the pressure damping means (10) are configured to adjust the first spray flow volume (Q1) to a second spray flow volume (Q2), corresponding to a second pressure value (p2) substantially equal to the operating pressure value (pi), to be conveyed through the spray line (12) to the spray nozzles (2), and to divert a second remaining flow volume (Qr2) of the first spray flow volume (Q1) to the tank (1), for example, through a second return line (14).

Thus, it is achieved that, during the operation of the fluid spraying system, even when there is a variation in the number of spray nozzles (2) that are in operation, a substantially constant pressure of fluid to be sprayed is maintained through the nozzles that are in operation, regardless of whether one or several spray nozzles (2) stop ejecting fluid, that is, stop operating. In other words, the pressure peaks and dips that arise in the system, caused by the deactivation or activation of any of the flow passage regulation means (4) that regulate the operation of a certain spray nozzle (2), or of several spray nozzles (2) that are under its control, are assimilated or dampened almost instantaneously, maintaining, at all times, a substantially constant pressure through the spray nozzles (2) whose flow passage regulation means (4) are activated, leading to a spraying of the fluid through these spray nozzles (2) that are in operation equivalent to if all the spray nozzles (2) of the system were operating, which leads to a significant saving of the fluid to be sprayed.

Otherwise, a greater quantity of fluid would come out of the spray nozzles (2) that are in operation than when all the spray nozzles (2) are operating, at a higher pressure, which would lead to unnecessary over-treatment of the agricultural or forestry crop or surface that is treated with the spray nozzles (2) that are in operation.

Advantageously, the pressure damping means (10) could be used with feedback, so that the control means (6) carry out the calibration thereof to the operating pressure value (pi), simply by instructing them to adjust the second pressure value (p2) to be substantially equal to the operating pressure value (pi) plus a first increment (x) of between 0.01% and 50% of the value of said operating pressure (pi). In a more preferred embodiment, said increment (x) is 10% of the value of said operating pressure (pi). In any case, with the addition of said first increment (x), the aim is to ensure that, when all the flow passage regulation means (4) are activated, that is, the system with all the spray nozzles (2) configured for the operating point (Qi, pi) operating, the pressure damping means (10) are not an impediment to the conveyance of all of the first spray flow volume (Q1), adjusted to the operating flow volume (Qi) at the operating pressure (pi), through the spray line (12) towards the spray nozzles (2).

However, if the pressure damping means (10) used in the system do not have feedback, then the control means (6) carry out the calibration thereof to the operating pressure (pi) according to the method for this purpose also object of the invention.

Additionally, second flow passage regulation means (18), for example, a solenoid valve, controlled by the control means (6), could be connected to the second return line (14), so that they respond to instructions to open or close the diversion of the second remaining flow volume (Qr2) from the pressure damping means (10) to the tank (1), which, as will be seen later, could be beneficial in the method for calibrating the pressure damping means (10) object of the invention.

As shown in Figure 1, in a preferred embodiment, the fluid spraying system could comprise respective flow passage regulation means (4) for each spray nozzle (2). However, in another possible embodiment of the fluid spraying system, shown in Figure 2, said system could comprise respective flow passage regulation means (4) by sections of groups of spray nozzles (2). In any case, it is preferred that the flow passage regulation means (4) be solenoid valves.

Advantageously, the fluid spraying system may additionally comprise agricultural or forestry crop or surface state indicator means (9), which, as their name indicates, are configured to report a state of the agricultural or forestry crop or agricultural or forestry surface to the control means (6).

The state of the agricultural or forestry crop or surface can be understood as the nature of the crop field to be treated, that is, the density and arrangement of the crop plants on the land, their height, leafiness and separation between plants, possible presence of pests, diseases, hydraulic stress, etc.

Preferably, the agricultural or forestry crop or surface state indicator means (9) are selected from the group consisting of a global navigation satellite system (GNSS), a terrestrial geo-positioning system, measurements based on human observation or artificial vision tied to geo-referenced points, or not, if carried out in real time, measurements based on photographs, ultrasound meters and laser radars, or any combination thereof.

Additionally, said agricultural or forestry crop or surface state indicator means (9) could be configured to send information on the state of the agricultural or forestry crop or agricultural or forestry surface to the control means (6) in real time, or to previously store said information in a database, either hosted on a remote or local server, said database being configured to be consulted by the control means (6).

In this way, valuable information will be available on the state of the agricultural or forestry crop or surface that will allow the fluid spraying system to know what the crop field or agricultural or forestry surface to be treated is like, the arrangement of the plants that make it up on the land, whether they are affected by pests, etc., which will allow the system to be calibrated to apply the appropriate treatment to said agricultural or forestry crop or agricultural or forestry surface.

For its part, it is preferred that the control means (6) are configured to command the activation or deactivation, independently, of the plurality of flow passage regulation means (4) depending on the state of the agricultural or forestry crop or agricultural or forestry surface to be treated with the fluid to be sprayed ejected by the corresponding spray nozzles (2) regulated by said flow passage regulation means (4).

Thus, although starting from a global value of volume of fluid (litres per hectare) of the treatment to be applied, determined by a specialist or experienced farmer, for a uniform state of the agricultural or forestry crop or surface to be treated, when we reach the field of said agricultural or forestry crop or surface, we find that the arrangement and characteristics of the plants or surface is irregular throughout said agricultural or forestry crop or surface to be treated, and for this reason, sometimes, the system is required to work with all the spray nozzles in operation, and on other occasions, only some of said spray nozzles are required to operate, because the leafiness of the crop or its height is different, the plant stem is bare and taller, etc., or because it is a part of the land where there are no plants of the crop sown and all spray nozzles are required to stop operating. In other words, advantageously, the control means (6) have real information about the state of the agricultural or forestry crop or surface, and based on said information, they can determine the areas, sites and exact moments where the system has to work with all the spray nozzles (2) in operation, and where it is required that only some of said spray nozzles (2) operate, or none, commanding the activation or deactivation of the flow passage regulation means (4) of the corresponding spray nozzles (2), and thus, a volume of fluid equivalent to the previously determined global value is applied to the agricultural or forestry crop or surface, which is optimised according to the state of the agricultural or forestry crop or surface while the treatment is carried out, in order to save fluid to be sprayed, for example, a phytosanitary product.

Additionally, the fluid spraying system could comprise a speed sensor (8), which is configured to measure a speed value (V) of the agricultural vehicle, and to send said measured speed value (V) to the control means (6).

For its part, it is preferred that the control means (6) are configured to command the actuation of the flow volume regulation means (5) based on a variation in the speed of the agricultural vehicle detected by the speed sensor (8), such that the operating flow volume value (Qi) is corrected based on the measured speed value (V).

This is very advantageous if the forward speed of the agricultural vehicle has to change due to some circumstance, for example, due to an uphill slope, a curve, a downhill slope, an obstacle, etc., during the operation of the agricultural spraying system. Logically, this variation in speed requires a correction of the operating flow volume value (Qi), and also of the operating pressure value (pi), with which the treatment of the agricultural or forestry crop or agricultural or forestry surface was being carried out.

The correction of the operating flow volume value (Qi), that is, its adaptation to the new situation of change or variation in speed experienced, is carried out based on the flow volume calculation formula:

$$Qic = \frac{Vc * D * R}{600}$$

by replacing the new measured velocity value (Vc), and keeping the values of the volume of fluid to be applied (D) and the lane or bar width (R) unchanged, the corrected operating flow volume value (Qic) is obtained.

Obviously, the control means (6) can also be configured to command the actuation of the flow volume regulation means (5) based on possible variations in the volume of fluid to be applied (D) and/or the lane or bar width (R), or, based on possible variations, at the same time, in the speed of the vehicle (V), the volume of fluid to be applied (D) and the lane or bar width (R), for example, when it is required to change the crop field to be treated. In these cases, in the same way as for the variation in speed of the agricultural vehicle, the adaptation of the operating flow volume value (Qi) to the new situation is carried out based on said flow volume calculation formula.

Likewise, it is preferred that the control means (6) are configured to command the actuation of the pressure damping means (10) based on the variation in speed of the agricultural vehicle detected by the speed sensor (8), so that, as mentioned, the operating pressure value (pi) is corrected, that is, adapted to the new situation, based on the measured speed value (V).

To correct the operating pressure value (pi), the following proportionality formula between flow volume and pressure is used:

$$\frac{Qi}{Qic} = \sqrt{\frac{pi}{pic}}$$

Wherein, involved are the initially defined operating flow volume (Qi), the operating pressure (pi) initially set for said operating flow volume (Qi), the corrected operating flow volume (Qic), due to a variation in the speed (V) of the vehicle, the volume of fluid to be applied (D) and/or the lane or bar width (R), as well as the intended corrected operating pressure (pic), which is determined in said proportionality formula between flow volume and pressure as follows:

$$pic = \left(\frac{Qic}{Qi}\right)^2 * pi$$

Thus, we have the corrected operating pressure value (pic), necessary to reach the corrected operating flow volume value (Qic).

In the above formula, that is, the proportionality formula between flow volume and pressure determined to find the corrected operating pressure value (pic), the corrected operating flow volume (Qic) could be provided by the flow volume calculation formula, as follows:

$$pic = \left(\frac{\frac{Vc * Dc * Rc}{600}}{Qi}\right)^2 * pi$$

And with this, we have the correction of the operating pressure value (pi) based on the new speed value (Vc) measured, or, equally, based on the change or variation of any of the rest of the parameters, that is, a new volume of fluid to be applied (Dc) or a new lane or bar width (Rc). Or any combination of change or variation of these parameters (Vc, Dc, Rc).

Once the corrected operating pressure value (pic) has been calculated by the control means (6), the latter command the actuation of the pressure damping means (10) to correct the operating pressure value (pi), that is, adjusting said pressure damping means (10) to the calculated corrected operating pressure value (pic).

Additionally, the fluid spraying system could comprise a flow meter (15) and a pressure sensor (7) connected to the spray line (12), for example, arranged between the pressure damping means (10) and the flow passage regulation means (4), and configured to measure respective flow volume and pressure values in said spray line (12), and send said measured values to the control means (6) for use in the calibration procedures.

Likewise, the fluid spraying system could comprise, arranged between the pump (3) and the flow volume regulation means (5), a pressure regulator (16), which acts as a fuse, such that, in the event of an increase in pressure above a maximum value to which the pressure regulator (16) is adjusted, for example, more than 25 bar, it will return part of the fluid flow volume (Q) driven by the pump (3) to the tank (1), through a third return line (17), such that the pressure (p) in the spray line (12) does not exceed said limit of 25 bar, thus avoiding the appearance of possible breaks in the system. Also said pressure regulator (16) could be useful in case the system requires a very small first spray flow volume (Q1), and in order not to drown the flow volume regulation means (5) with the fluid flow volume (Q) driven by the pump (3), the pressure regulator (16) can be used to limit the fluid flow volume (Q) that reaches said flow volume regulation means (5), diverting most of said fluid flow volume (Q) driven by the pump (3) to the tank (1) through the third return line (17).

The method for calibrating the operating point of the fluid spraying system starts by defining the operating flow volume value (Qi) of the fluid to be sprayed on the agricultural or forestry crop or the agricultural or forestry surface to be treated.

The operating flow volume value (Qi) is defined or calculated by the control means (6) depending on the volume of fluid to be applied (D) in l/ha, the speed of the vehicle (V) in km/h, and the lane or bar width (R) in m, through the flow volume calculation formula:

$$Qi = \frac{V * D * R}{600}$$

Where, the values of volume of fluid to be applied (D), vehicle speed (V) and lane or bar width (R) are determined by a specialist or experienced farmer, who seeks to give a uniform treatment to the entire agricultural or forestry crop, or to the entire agricultural or forestry surface to be treated. Alternatively, such values may be recommended by the system itself, i.e., by the control means (6).

Once the operating flow volume value (Qi) has been defined, the control means (6) determine the operating pressure value (pi) for said operating flow volume value (Qi), for example, with the aid of a lookup table which includes information on individual flow volume (Qb) and pressure (pb) values (Qb=f(pb)) for each type of spray nozzle (2) to be used, i.e., to be configured to eject the fluid to be sprayed. For example, said table may be provided by the nozzle manufacturer, or obtained by measurements of said spray nozzles (2) previously carried out "in situ", so that the operating pressure value (pi) can be determined based on the operating flow volume value (Qi) and the type(s) of spray nozzle(s) (2) to be used.

To do this, tests can be carried out assuming different individual pressure values (pb), for example, between 2 bar and 25 bar, for which, in the lookup table, depending on the type(s) of spray nozzle (2) to be used, there are respective individual flow volume values (Qb) whose sum corresponds to the previously defined operating flow volume value (Qi), i.e., Qi=sum(Qb(pb)). Where, for each individual pressure value (pb) tested, it is checked whether it would be suitable to obtain the value of fluid to be applied (D) used to obtain the previously defined operating flow volume value (Qi), which is done using the following formula:

$$D = \frac{\text{sum}(\text{Qb}(\text{pb})) * 600}{V * R}$$

Where, sum(Qb(pb)) represents the sum of all the individual flow volumes (Qb), of the spray nozzles (2) that are planned to be used, at the individual pressure (pb) to be checked. If the result of the above formula is substantially equal to the value of the fluid to be applied (D) that was used to define the operating flow volume value (Qi), then said individual pressure value (pb) checked is taken as the operating pressure value (pi).

Additionally, if the individual pressure value (pb) required to achieve a certain individual flow volume value (Qb) is not indicated in the lookup table, said pressure value can be determined by equivalence using the following formula:

$$\text{Pre} = (\text{Qre} / \text{Qin})^2 * \text{Pin}$$

Where, Pre is the required pressure, Pin is the pressure indicated in the lookup table, Qre is the required flow volume and Qin is the flow volume indicated in the lookup table.

In addition, if liquids with a specific weight other than that of water are used as the fluid to be sprayed, it can be provided that the individual flow volume values (Qb) of the lookup table are multiplied by a predetermined conversion coefficient, in order to conveniently determine the operating pressure value (pi) adjusted to the specific weight of the fluid to be sprayed.

Likewise, instead of the lookup table, mathematical approximation functions or any other possible tool could be used to determine the operating pressure value (pi) based on the operating flow volume value (Qi) and the type(s) of spray nozzle(s) (2) to be used.

In any case, after determining the operating pressure value (pi) of the operating point, the flow passage regulation means (4) are activated, so that, with the system in operation, all the spray nozzles (2) configured to be used eject fluid to be sprayed. In other words, the spraying system may include additional spray nozzles (2) to those configured to be used according to the operating point to be calibrated, whose flow passage regulation means (4) will remain deactivated throughout the treatment to be applied.

Next, the pressure damping means (10) are actuated, or, if it is desired to act more quickly, the pressure damping means (10) are kept at the operating point where they are and the second flow passage regulation means (18) of the second return line (14) that connects said pressure damping means (10) to the tank (1) are closed, in both cases it is sought that, with the system in operation, all of the first spray flow volume (Q1) is conveyed through the spray line (12) to the spray nozzles (2).

Subsequently, the flow volume regulation means (5) are actuated, so that they generate a progressive variation of the first spray flow volume (Q1) to be conveyed through the spray line (12), either by increasing or decreasing said first spray flow volume (Q1) as appropriate for its adjustment or approximation to the operating flow volume value (Qi), and in a first embodiment, measurements are made of the value of the first spray flow volume (Q1) conveyed through the spray line (12). In a second possible embodiment, as an alternative to measuring the first spray flow volume value (Q1), it could be envisaged to measure the first pressure value (p1) of said first spray flow volume (Q1).

Preferably, in the first embodiment, the measurement of the first spray flow volume value (Q1) is performed using a flow meter (15) connected to the spray line (12). Likewise, for the second embodiment, i.e., if in this step measurements of the first pressure value (p1) of the first spray flow volume (Q1) are provided, it is preferred that said measurements be carried out using a pressure sensor (7) also connected to the spray line (12).

In the first embodiment, once it is detected that the first spray flow volume value (Q1) measured is substantially equal to the defined operating flow volume (Qi), or, in the second alternative embodiment, if it is detected that the first pressure value (p1) measured is substantially equal to the operating pressure value (pi), in either of the two embodiments, then the flow volume regulation means (5) are actuated again, so as to stop the progressive variation of the first spray flow volume (Q1).

Next, in continuity with the first embodiment, the first pressure value (p1) of the first spray flow volume (Q1) is measured, or, in continuity with the second alternative embodiment, the first spray flow volume value (Q1) would be measured.

As before, as required, it is preferred that the flow meter (15) be used for measuring the first spray flow volume value (Q1), and that the pressure sensor (7) be used for measuring the first pressure value (p1), both measuring devices (7, 15) being connected to the spray line (12).

Finally, in the first embodiment, it is verified that the measured first pressure value (p1) is substantially equal to the operating pressure value (pi), or, in the second embodiment, it is verified that the measured first spray flow volume value (Q1) is substantially equal to the operating flow volume value (Qi).

Thus, in a simple and effective way, the fluid spraying system can be calibrated to the operating working point, that is, to the operating flow volume value (Qi), as well as to the operating pressure value (pi) required according to said operating flow volume (Qi), to apply uniform treatment to the entire agricultural or forestry

**EP 4 566 721 A1**

crop, or to the entire agricultural or forestry crop surface to be treated, with all the spray nozzles (2) of the system configured to be used in operation.

In addition, if as a result of the check carried out in the final step of the method for calibrating the operating point it is detected that, in the first embodiment, the first pressure value (p1) is not substantially equal to the operating pressure value (pi), or, in the second alternative embodiment, it is detected that the first spray flow volume value (Q1) is not substantially equal to the operating flow volume value (Qi), in both embodiments, there are indications that there is some problem in the spraying system that must be solved before proceeding with the spraying tasks, for example, it could be that one of its spray nozzles (2) is clogged or damaged, or there is a liquid leak at some point in the spray line (12) of the system, which prevents its correct operation. It can thereby be foreseen that in these cases the system emits a visual, audible and/or vibrating alarm, controlled by the control means (6), to draw the attention of the operator of the spraying system in vehicles with a driver. The system could also report the alarm digitally, for example, through a local and/or cloud-based log, a notification on a mobile computer application (app) running on a mobile electronic device, such as a phone or tablet, of the farm supervisor, etc.

For its part, the method for calibrating the pressure damping means of the fluid spraying system to the operating pressure (pi) starts from having the flow passage regulation means (4) activated, so that all the spray nozzles (2) configured to be used eject fluid to be sprayed.

Next, the flow volume regulation means (5) are actuated so that the first spray flow volume (Q1) is substantially equal to the operating flow volume value (Qi) of the operating point of the spraying system previously calibrated according to the method described above. To this end, it may be provided that the flow volume regulation means (5) are actuated so as to generate a progressive variation of the first spray flow volume (Q1) until the operating flow volume value (Qi) is detected by a flow meter (15) connected to the spray line (12), or until the operating pressure value (pi) is detected by a pressure sensor (7) also connected to said spray line (12).

Subsequently, the pressure damping means (10) are actuated, or, if it is desired to act more quickly, the pressure damping means (10) are kept at the operating point where they are and the second flow passage regulation means (18) of the second return line (14) that connects said pressure damping means (10) to the tank (1) of the system are closed, so that, in both embodiments, all of the first spray flow volume (Q1) is conveyed through the spray line (12) to the spray nozzles (2).

Then, the flow volume regulation means (5) are actuated, so that a first pressure value (p1) of the first spray flow volume (Q1) is substantially equal to the operating pressure value (pi) of the calibrated operating point plus, at most, twice a first increment (x) of between 0.01% and 50% of the value of said operating pressure (pi). To this end, it can be provided that the flow volume regulation means (5) are actuated so as to generate a progressive variation of the first spray flow volume (Q1) until said first pressure value (p1) (equal to the operating pressure (pi) plus, at most, twice the first increment (x)) is detected by the pressure sensor (7). In this step, the aim is to achieve a first pressure value (p1) of the first spray flow volume (Q1) (first pressure value (p1) = operating pressure (pi) + between 1.1 and 2 * first increment (x)) which is somewhat higher than the second pressure value (p2) (second pressure value (p2) = operating pressure (pi) + first increment (x)) to which the pressure damping means (10) will be adjusted in the next step.

Next, the pressure damping means (10) are actuated, with the second flow passage regulation means (18) open, which causes part of the first spray flow volume (Q1) (second remaining flow volume (Qr2)) to be diverted to the tank (1), so that a second pressure value (p2) reached, after the pressure damping means (10) are actuated, is substantially equal to the operating pressure value (pi) plus the first increment (x). For this, it can be provided that the pressure damping means (10) are actuated so as to progressively reduce the first spray flow volume value (Q1) until the second pressure value (p2) (substantially equal to the operating pressure (pi) plus the first increment (x)) is detected by the pressure sensor (7). In this step, the pressure damping means (10) are adjusted to a working pressure (second pressure value (p2)) which is slightly higher than the operating pressure (pi) (second pressure value (p2) = operating pressure (pi) + first increment (x)), so that the pressure damping means (10) allow the entire first spray flow volume (Q1) to be conveyed to the spray nozzles (2), when said first spray flow volume (Q1) is substantially equal to the operating flow volume (Qi), and the first pressure value (p1) is substantially equal to the operating pressure (pi), i.e., when the system is operating at the calibrated operating point.

Then, the flow volume regulation means (5) are actuated again, so that the first spray flow volume (Q1) is substantially equal to the operating flow volume (Qi). For this, it can also be provided that the flow volume regulation means (5) are actuated so as to generate a progressive variation of the first spray flow volume (Q1) until the operating flow volume value (Qi) is detected by the flow meter (15) connected to the spray line (12), or until the operating pressure value (pi) is detected by the pressure sensor (7) also connected to said spray line (12).

Likewise, when the operating flow volume (Qi) and operating pressure (pi) values need to be corrected based on a variation in speed (V), volume of fluid to be applied (D) and/or lane or bar width (R), and a corrected operating pressure value (pic) is lower than the operating pressure value (pi), the following additional steps can be followed to calibrate the pressure damping means (10) to the corrected operating pressure value (pic).

If not activated, the flow passage regulation means (4) are activated, so that all the spray nozzles (2) configured to be used eject fluid to be sprayed.

The pressure damping means (10) are then actuated so that the second pressure value (p2) is substantially equal to the corrected operating pressure value (pic) plus a second increment (y) of between 0.01% and 50% of the value of said corrected operating pressure (pic). For this, it can also be provided that the pressure damping means (10) are actuated so as to progressively reduce the first spray flow volume value (Q1) until the second pressure value (p2), which is equal to the corrected operating pressure (pic) plus the second increment (y), is detected by the pressure sensor (7).

And finally, the flow volume regulation means (5) are actuated, so that the first spray flow volume (Q1) is substantially equal to the corrected operating flow volume (Qic) corresponding to the corrected operating pressure value (pic). For this, it can also be provided that the flow volume regulation means (5) are actuated so as to generate a progressive variation of the first spray flow volume (Q1) until the corrected operating flow volume value (Qic) is detected by the flow meter (15), or until the corrected operating pressure value (pic) is detected by the pressure sensor (7).

However, when the flow volume (Qi) and operating pressure (pi) values also require correction based on a variation in speed (V), volume of fluid to be applied (D) and/or lane or bar width (R), but a corrected operating pressure value (pic) is greater than the operating pressure value (pi), the following additional steps are followed to calibrate the pressure damping means (10) to the corrected operating pressure value (pic).

If not activated, the flow passage regulation means (4) are activated, so that all the spray nozzles (2) configured to be used eject fluid to be sprayed.

Next, the pressure damping means (10) are actuated, or the second flow passage regulation means (18) are closed, so that all of the first spray flow volume (Q1) is conveyed through the spray line (12) to the spray nozzles (2).

Then, the flow volume regulation means (5) are actuated, so that the first pressure value (p1) of the first spray flow volume (Q1) is substantially equal to the corrected operating pressure value (pic) plus, at most, twice the second increment (y) of between 0.01% and 50% of the value of said corrected operating pressure (pic). For this, it may be provided that the flow volume regulation means (5) are actuated so as to generate a progressive variation in the first spray flow volume (Q1) until said first pressure value (p1) (equal to the corrected operating pressure (pic) plus, at most, twice the second increment (y)) is detected by the pressure sensor (7). In this step, the aim is to achieve a first pressure value (p1) of the first spray flow volume (Q1) (first pressure value (p1) = corrected operating pressure (pic) + between 1.1 and 2 * second increment (y)) which is somewhat higher than the second pressure value (p2) (second pressure value (p2) = corrected operating pressure (pic) + second increment (y)) to which the pressure damping means (10) will be adjusted in the next step.

Next, the pressure damping means (10) are actuated, with the second flow passage regulation means (18) open, so that the second pressure value (p2) is substantially equal to the corrected operating pressure value (pic) plus the second increment (y). For this, it can also be provided that the pressure damping means (10) are actuated so as to progressively reduce the value of the first spray flow volume (Q1) until the second pressure value (p2), which is substantially equal to the corrected operating pressure (pic) plus the second increment (y), is detected by the pressure sensor (7).

And finally, the flow volume regulation means (5) are actuated, so that the first spray flow volume (Q1) is substantially equal to the corrected operating flow volume (Qic) corresponding to the corrected operating pressure value (pic). For this, it can also be provided that the flow volume regulation means (5) are actuated so as to generate a progressive variation of the first spray flow volume (Q1) until the corrected operating flow volume value (Qic) is detected by the flow meter (15), or until the corrected operating pressure value (pic) is detected by the pressure sensor (7).

In any case, it is possible to calibrate the pressure damping means (10) of the fluid spraying system to a slightly higher second pressure value (p2), that is, substantially equal, to the operating pressure value (pi) previously set for the fluid spraying system, so that, if said system is working at the operating pressure (pi), that is, with all the spray nozzles (2) in operation, the pressure damping means (10) allow all of the first spray flow volume (Q1) to be conveyed through the spray line (12) to said spray nozzles (2).

However, when a pressure peak or dip occurs, as a result of the deactivation or activation of one or several flow passage regulation means (4) which causes one or several spray nozzles (2) to stop ejecting fluid or to start operating respectively, then, the pressure damping means (10) adjust (by reducing or increasing flow volume) the first spray flow volume (Q1) to a second spray flow volume (Q2), corresponding to the second pressure value (p2), which is substantially equal to the operating pressure value (pi), to continue being conveyed through the spray line (12) to the spray nozzles (2), and if necessary, divert a second remaining flow volume (Qr2) of the first spray flow volume (Q1) to the tank (1), for example, through a second return line (14).

Thus, it is achieved that, during the operation of the fluid spraying system, a substantially constant pressure of the fluid to be sprayed is maintained through the spray nozzles (2) of the system that are in operation, regardless of whether one or several of said spray nozzles (2) stop operating or start operating.

## Claims

1. Fluid spraying system, adapted to be mounted on an agricultural vehicle, whether self-propelled or as a trailer propelled by another vehicle, comprising:

   - a tank (1), which is configured to contain a fluid to be sprayed,
   - a plurality of spray nozzles (2), which are configured to eject the fluid to be sprayed onto an agricultural or forestry crop or an agricultural or forestry surface to be treated,
   - a pump (3), connected to the tank (1) through a supply line (11), and which is configured to drive a fluid flow volume (Q) through a spray line (12) connecting the pump (3) to the spray nozzles (2),
   - a plurality of flow passage regulation means (4), connected to the spray line (12), and which are configured to regulate outputs of the fluid to be sprayed through the spray nozzles (2),
   - flow volume regulation means (5), connected to the spray line (12), and configured to reduce the fluid flow volume (Q) to a first spray flow volume (Q1) to be conveyed through the spray line (12) to the spray nozzles (2), and to divert a first remaining flow volume (Qr1) of the fluid flow volume (Q) to the tank (1),
   - control means (6), which are configured to command an activation/deactivation of the flow passage regulation means (4) and to command an actuation of the flow volume regulation means (5), such that the first spray flow volume (Q1) is adjusted to an operating flow volume value (Qi) to be used with all the flow passage regulation means (4) activated,

   **characterised in that** it comprises a pressure damping means (10), connected to the spray line (12) between the flow volume regulation means (5) and the flow passage regulation means (4), and configured to dampen pressure peaks and dips of the first spray flow volume (Q1) in relation to an operating pressure value (pi), such that, when a first pressure value (p1) of the first spray flow volume (Q1) differs substantially from the operating pressure value (pi), due to the deactivation or activation of at least one of the flow passage regulation means (4), the pressure damping means (10) are configured to adjust the first spray flow volume (Q1) to a second spray flow volume (Q2), corresponding to a second pressure value (p2) substantially equal to the operating pressure value (pi), to be conveyed through the spray line (12) to the spray nozzles (2), and to divert a second remaining flow volume (Qr2) of the first spray flow volume (Q1) to the tank (1).

2. System according to claim 1, comprising agricultural or forestry crop or surface state indicator means (9) that are configured to report a state of the agricultural or forestry crop or surface to the control means (6), and the control means (6) are configured to command the activation/deactivation, independently, of the plurality of flow passage regulation means (4) depending on the state of the agricultural or forestry crop or surface to be treated with the fluid to be sprayed ejected by the corresponding spray nozzles (2) regulated by said flow passage regulation means (4).

3. System according to claim 2, wherein the agricultural or forestry crop or surface state indicator means (9) are selected from the group consisting of a global navigation satellite system (GNSS), a terrestrial geo-positioning system, measurements based on human observation or artificial vision tied to geo-referenced points, measurements based on human observation or artificial vision carried out in real time, measurements based on photographs, ultrasound meters and laser radars, or any combination thereof, configured to send information on the state of the agricultural or forestry crop or surface to the control means (6) in real time, or to previously store said information in a database, hosted on a remote or local server, configured to be consulted by the control means (6).

4. System according to claims 1 or 2, comprising respective flow passage regulation means (4) for each spray nozzle (2).

5. System according to claims 1 or 2, comprising respective flow passage regulation means (4) by sections of groups of spray nozzles (2).

6. System according to claims 4 or 5, wherein the flow passage regulation means (4) are solenoid valves.

7. System according to claim 1, comprising a speed sensor (8), which is configured to measure a speed value (V) of the agricultural vehicle and send the measured speed value (V) to the control means (6), where, the control means (6) are configured to command the actuation of the flow volume regulation means (5) based on a variation in speed of the agricultural vehicle, detected by the speed sensor (8), a variation in a volume of fluid to be applied (D) and/or a variation in a lane or bar width (R), such that, the operating flow volume value (Qi) is corrected based on the measured speed value (V), of the varied volume of fluid to be applied (D) or of the varied lane or bar width (R), or any combination thereof.

8. System according to claim 7, wherein the control means (6) are configured to command the actuation of the pressure damping means (10) based on the variation in speed of the agricultural vehicle, detected by the speed sensor (8), the variation in volume of fluid to be applied (D) and/or the variation in lane or bar width (R), such that the operating pressure value (pi) is corrected based on the measured speed value (V), the varied volume of fluid to be applied (D) or the varied lane or bar width (R), or any combination thereof.

9. System according to claim 1, wherein the flow volume regulation means (5) are an electric flow volume regulator.

10. Method for calibrating the operating point of a fluid spraying system according to any of the preceding claims, comprising the following steps:

a) defining an operating flow volume value (Qi) of the fluid to be sprayed on an agricultural or forestry crop or an agricultural or forestry surface to be treated,
b) determining an operating pressure value (pi), based on a configuration of spray nozzles (2) to be used and the operating flow volume value (Qi) defined in step a),
c) activating flow passage regulation means (4), so that, in operation, all of the spray nozzles (2) configured to be used eject fluid to be sprayed,
d) actuating pressure damping means (10) or closing second flow passage regulation means (18) of a second return line (14) connecting the pressure damping means (10) to a tank (1), so that, in operation, all of a first spray flow volume (Q1) is conveyed through a spray line (12) to the spray nozzles (2),
e) actuating flow volume regulation means (5), so as to generate a progressive variation of the first spray flow volume (Q1) to be conveyed through the spray line (12),
f) measuring a first spray flow volume (Q1) value or a first pressure value (p1) of said first spray flow volume (Q1),
g) detecting that the first spray flow volume value (Q1) measured in step f) is substantially equal to the operating flow volume value (Qi) defined in step a), or detecting that the first pressure value (p1) measured in step f) is substantially equal to the operating pressure value (pi) determined in step b),
h) actuating the flow volume regulation means (5), so that they stop the progressive variation of the first spray flow volume (Q1),
i) measuring the first pressure value (p1) of the first spray flow volume (Q1), when in step f) the value of said first spray flow volume (Q1) was measured, or measuring the value of the first spray flow volume (Q1), when in step f) the first pressure value (p1) of said first spray flow volume (Q1) was measured,
j) checking that the first pressure value (p1) measured in step i) is substantially equal to the operating pressure value (pi), or checking that the first spray flow volume value (Q1) measured in step i) is substantially equal to the operating flow volume value (Qi).

11. Method according to claim 10, wherein for the measurement of the value of the first spray flow volume (Q1), when performed in any of steps f) or i), a flow meter (15) connected to the spray line (12) is used, and for the measurement of the first pressure value (p1), when performed in any of said steps f) or i), a pressure sensor (7) connected to said spray line (12) is used.

12. Method for calibrating pressure damping means of a fluid spraying system according to any of claims 1 to 9 at an operating pressure, comprising the following steps:

a) activating flow passage regulation means (4), so that all of the spray nozzles (2) configured to be used eject fluid to be sprayed,
b) actuating flow volume regulation means (5), so that a first spray flow volume (Q1) is substantially equal to an operating flow volume value (Qi) of an operating point of the fluid spraying system previously calibrated according to the method of any of claims 10 to 11,
c) actuating pressure damping means (10) or closing second flow passage regulation means (18) of a second return line (14) connecting the pressure damping means (10) to a tank (1), so that all the first spray flow volume (Q1) is conveyed through a spray line (12) to the spray nozzles (2),
d) actuating the flow volume regulation means (5), so that a first pressure value (p1) of the first spray flow volume (Q1) is substantially equal to an operating pressure value (pi) of the calibrated operating point plus, at most, twice a first increment (x) of between 0.01% and 50% of the value of said operating pressure (pi),
e) actuating the pressure damping means (10), with the second flow passage regulation means (18) open, so that a second pressure value (p2) is substantially equal to the operating pressure value (pi) plus the first increment (x),
f) actuating the flow volume regulation means (5), so that the first spray flow volume (Q1) is substantially equal to the operating flow volume (Qi).

13. Method according to claim 12, wherein, in steps b) and f), the flow volume regulation means (5) are actuated so as to generate a progressive variation of the first spray flow volume (Q1) until the operating flow volume value (Qi) is detected by a flow meter (15) connected to the spray line (12), or until the operating pressure value (pi) is detected by a pressure sensor (7) connected to said spray line (12).

14. Method according to claim 12, wherein, when the operating flow volume (Qi) and operating pressure (pi) values require correction based on a variation in speed (V), volume of fluid to be applied (D) and/or lane or bar width (R), and a corrected operating pressure value (pic) is lower than the operating pressure value (pi), the following additional steps are followed to calibrate the pressure damping means (10) to the corrected operating pressure value (pic):

g) activating the flow passage regulation means (4), so that all the spray nozzles (2) configured to be used eject fluid to be sprayed,
h) actuating the pressure damping means (10) so that the second pressure value (p2) is substantially equal to the corrected operating pressure value (pic) plus a second increment (y) of between 0.01% and 50% of the value of said corrected operating pressure (pic),
i) actuating the flow volume regulation means (5), so that the first spray flow volume (Q1) is substantially equal to the corrected operating flow volume (Qic) corresponding to the corrected operating pressure value (pic).

15. Method according to claim 12, wherein, when the flow volume (Qi) and operating pressure (pi) values require correction based on a variation in speed (V), volume of fluid to be applied (D) and/or lane or bar width (R), and a corrected operating pressure value (pic) is greater than the operating pressure value (pi), the following additional steps are followed to calibrate the pressure damping means (10) to the corrected operating pressure value (pic):

j) activating the flow passage regulation means (4), so that all the spray nozzles (2) configured to be used eject fluid to be sprayed,
k) actuating the pressure damping means (10) or closing the second flow passage regulation means (18), so that all of the first spray flow volume (Q1) is conveyed through the spray line (12) to the spray nozzles (2),
l) actuating the flow volume regulation means (5), so that the first pressure value (p1) of the first spray flow volume (Q1) is substantially equal to the corrected operating pressure value (pic) plus, at most, twice a second increment (y) of between 0.01% and 50% of the value of said corrected operating pressure (pic),

m) actuating the pressure damping means (10), with the second flow passage regulation means (18) open, so that the second pressure value (p2) is substantially equal to the corrected operating pressure value (pic) plus the second increment (y),
n) actuating the flow volume regulation means (5), so that the first spray flow volume (Q1) is substantially equal to the corrected operating flow volume (Qic) corresponding to the corrected operating pressure value (pic).

Fig. 1

Fig. 2

| | International application No. |
|---|---|
| **INTERNATIONAL SEARCH REPORT** | PCT/ES2023/070458 |

**A. CLASSIFICATION OF SUBJECT MATTER**

*B05B12/08* (2006.01)
*A01M7/00* (2006.01)
According to International Patent Classification (IPC) or to both national classification and IPC

**B. FIELDS SEARCHED**

Minimum documentation searched (classification system followed by classification symbols)
B05B, A01M

Documentation searched other than minimum documentation to the extent that such documents are included in the fields searched

Electronic data base consulted during the international search (name of data base and, where practicable, search terms used)

EPODOC, INVENES

**C. DOCUMENTS CONSIDERED TO BE RELEVANT**

| Category* | Citation of document, with indication, where appropriate, of the relevant passages | Relevant to claim No. |
|---|---|---|
| A | US 2020163292 A1 (GERDES JERRY ET AL.) 28/05/2020, paragraphs[16 - 36]; figure 3. | 1-15 |
| A | US 11220421 B1 (SANDEY MITCHELL ET AL.) 11/01/2022, the whole document. | 1-15 |
| A | US 2019337001 A1 (FRITZ HANS-GEORG ET AL.) 07/11/2019, the whole document. | 1-15 |
| A | US 2021235640 A1 (LEBARON WAYNE) 05/08/2021, the whole document. | 1-15 |

☐ Further documents are listed in the continuation of Box C.    ☒ See patent family annex.

| | | |
|---|---|---|
| * | Special categories of cited documents: | |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | |
| "O" | document referring to an oral disclosure use, exhibition, or other means. | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other documents , such combination being obvious to a person skilled in the art

"&" document member of the same patent family

| Date of the actual completion of the international search | Date of mailing of the international search report |
|---|---|
| 04/08/2023 | **(09/08/2023)** |

| Name and mailing address of the ISA/ | Authorized officer |
|---|---|
| OFICINA ESPAÑOLA DE PATENTES Y MARCAS<br>Paseo de la Castellana, 75 - 28071 Madrid (España)<br>Facsimile No.: 91 349 53 04 | J. Celemín Ortiz-Villajos<br><br>Telephone No. 913495493 |

Form PCT/ISA/210 (second sheet) (July 2022)

## INTERNATIONAL SEARCH REPORT

| | | | |
|---|---|---|---|
| | | US2022266311 A1 | 01.12.2021 |
| | | US2022266286 A1 | 20.11.2020 |
| | | US2022264864 A1 | 14.10.2020 |
| | | US2022264863 A1 | 10.08.2022 |
| | | US2022264862 A1 | 07.10.2020 |
| | | US2022266811 A1 | 20.10.2021 |
| | | US2022268662 A1 | 07.10.2020 |
| | | US11213846 B1 | 29.09.2021 |
| | | ----------------------- | 23.01.2020 |
| | | ES2926830T T3 | 17.12.2021 |
| | | ES2902929T T3 | 01.08.2019 |
| | | ES2902636T T3 | 26.10.2021 |
| | | HUE056652T T2 | 02.08.2019 |
| | | EP3915686 A1 | 11.03.2022 |
| | | ES2795059T T3 | 14.06.2018 |
| | | EP3722006 A1 | 11.09.2019 |
| | | EP3722006 B1 | 13.05.2020 |
| | | EP3718640 A1 | 21.06.2018 |
| ------------------------------------------------- | --------------------- | EP3718640 B1 | -------------- |
| US2021235640 A1 | 05.08.2021 | EP3718639 A1 | 04.08.2022 |
| | | EP3718639 B1 | 14.07.2022 |
| | | JP2020501883 A | 05.04.2022 |
| ------------------------------------------------- | --------------------- | JP6983241B B2 | -------------- |
| | | MX2019006964 A | |
| | | US11154892 B2 | |
| | | CN110087778 A | |
| | | CN110087778B B | |
| | | DE102016014956 A1 | |
| | | EP3535062 A1 | |
| | | EP3535062 B1 | |
| | | WO2018108562 A1 | |
| | | ----------------------- | |
| | | WO2022165192 A1 | |
| | | US2022217929 A1 | |
| | | US11291171 B2 | |
| | | ----------------------- | |

Form PCT/ISA/210 (patent family annex) (July 2022)

## INTERNATIONAL SEARCH REPORT

Information on patent family members

International application No.

PCT/ES2023/070458

| Patent document cited in the search report | Publication date | Patent family member(s) | Publication date |
|---|---|---|---|
| US2020163292 A1 | 28.05.2020 | MX2021006075 A | 06.07.2021 |
| | | ZA202103054 B | 27.07.2022 |
| | | BR112021010140 | 24.08.2021 |
| | | A2 | 23.07.2021 |
| | | CN113163724 A | 03.06.2021 |
| | | AU2019390312 A1 | 04.06.2020 |
| | | CA3118986 A1 | 06.10.2021 |
| | | EP3886570 A1 | 31.08.2022 |
| | | EP3886570 A4 | 04.06.2020 |
| | | WO2020112449 A1 | 21.06.2022 |
| | | US11363766 B2 | ------------- |
| US11220421 B1 | 11.01.2022 | BR102022003272 | 06.09.2022 |
| | | A2 | 06.09.2022 |
| | | BR102022003080 | 06.09.2022 |
| | | A2 | 06.09.2022 |
| | | BR102022003285 | 30.08.2022 |
| | | A2 | 30.08.2022 |
| | | BR102022003271 | 30.08.2022 |
| | | A2 | 30.08.2022 |
| | | BR102022003284 | 30.08.2022 |
| | | A2 | 30.08.2022 |
| | | BR102022002850 | 30.08.2022 |
| | | A2 | 08.09.2022 |
| | | BR102022003072 | 08.09.2022 |
| | | A2 | 08.09.2022 |
| | | BR102022002934 | 08.09.2022 |
| | | A2 | 08.09.2022 |
| | | BR102022003290 | 08.09.2022 |
| | | A2 | 08.09.2022 |
| | | BR102022002921 | 08.09.2022 |
| | | A2 | 08.09.2022 |
| | | BR102022002883 | 08.09.2022 |
| | | A2 | 08.09.2022 |
| | | BR102022003212 | 08.09.2022 |
| | | A2 | 08.09.2022 |
| | | AU2022201158 A1 | 25.08.2022 |
| | | AU2022201141 A1 | 25.08.2022 |
| | | AU2022201143 A1 | 25.08.2022 |
| | | AU2022201131 A1 | 25.08.2022 |
| | | AU2022201133 A1 | 25.07.2023 |
| | | AU2022201139 A1 | 25.08.2022 |
| | | AU2022201208 A1 | 25.08.2022 |
| | | AU2022201191 A1 | 25.08.2022 |
| | | AU2022201129 A1 | 25.08.2022 |
| | | AU2022201125 A1 | 25.08.2022 |
| | | AU2022201126 A1 | 25.08.2022 |
| | | AU2022201212 A1 | 25.08.2022 |
| | | AU2022201160 A1 | 04.01.2022 |
| | | US2022268300 A1 | ------------- |
| US2019337001 A1 | 07.11.2019 | US2022264797 A1 | 28.10.2022 |
| | | US2022267996 A1 | 30.03.2022 |
| | | US2022267136 A1 | 29.03.2022 |
| | | US11708061 B2 | 28.02.2022 |